# EUROPEAN PATENT SPECIFICATION

(11) **EP 3 205 864 B1**
(45) Date of publication and mention of the grant of the patent: **09.01.2019**
(21) Application number: 17153204.7
(22) Date of filing: 26.01.2017
(51) Int. Cl.: F02D 41/02, F02B 37/10, F02B 37/24, F02D 41/00, F02D 41/14

(54) **ENGINE CONTROLLER AND ENGINE CONTROL METHOD**
MOTORSTEUERGERÄT UND MOTORSTEUERUNGSVERFAHREN
ORGANE DE COMMANDE DE MOTEUR ET PROCÉDÉ DE COMMANDE DE MOTEUR

(30) Priority: 12.02.2016 JP 2016024736
(43) Date of publication of application: 16.08.2017
(73) Proprietor: Bosch Corporation, Tokyo 150-8360 (JP)
(72) Inventor: ARIYOSHI, Manabu, Saitama, 3558603 (JP)
(74) Representative: Bee, Joachim

(56) References cited:
- EP-A1- 2 314 847
- DE-A1- 19 905 420
- JP-A- 2004 116 467
- JP-A- 2005 320 937
- JP-A- 2009 275 620

## Description

### BACKGROUND OF THE INVENTION

### 1. Field of the Invention

The present invention relates to an engine controller and an engine control method for controlling a diesel engine or the like with a supercharger that is mounted in a vehicle or the like.

### 2. Description of the Background Art

An NOx occlusion-reduction catalyst for purifying exhaust gas is provided in an exhaust route of an engine (see Patent Document 1). The NOx occlusion-reduction catalyst occludes NOx (nitrogen oxides) in the exhaust gas in a lean combustion mode and reduces and removes NOx in a rich combustion mode.

It has been widely practiced that the engine is provided with a supercharger to improve thermal efficiency and output. The supercharger drives a turbine by using the exhaust gas flowing through the exhaust route, so as to supercharge air flowing through an intake route to the engine by a compressor that is coupled to the turbine. The exhaust route of the engine is provided with, as an adjustment mechanism for adjusting supercharging pressure, a waste gate valve by which the exhaust gas flowing into the turbine is bypassed, a variable nozzle turbo vane (a VNT vane) that changes an exhaust gas pass-through area of the turbine, and the like.

A method for controlling a wastegate in a turbocharged internal combustion engine is known from Patent Document 2. Moreover, Patent Document 3 discloses a supercharging pressure controller of an internal combustion engine.
Patent Document 1: JP-A-2010-24957
Patent Document 2: EP-A1-2314847
Patent Document 3: JP-A-2005-320937

A conventional supercharging pressure control system feeds back the supercharging pressure and operates the waste gate valve, the VNT vane, and the like, which are described above, to control opening degrees thereof, so as to eliminate a deviation between actual supercharging pressure, which has been subjected to the feedback, and target supercharging pressure. In this way, the supercharging pressure is controlled. However, in the conventional supercharging pressure control system, excess closing of the waste gate valve and/or the VNT vane or the like possibly leads to significant overshooting of pressure (exhaust pressure) in the exhaust route when an operation of the NOx occlusion-reduction catalyst is shifted from that in the rich combustion mode to that in the lean combustion mode.

Such overshooting of the exhaust pressure is desirably reduced from perspectives of hardware protection and fuel consumption. Accordingly, it can be raised, as measures for reducing the above-described overshooting, to change setting of a target value of the supercharging pressure by reduction and to increase minimum values of a valve opening degree of the waste gate valve and a vane opening degree of the VNT vane, and the like, for example. However, the measures as described above degrade drivability and exhaust performance, such as degraded responsiveness in accordance with an accelerator pedal operation (an acceleration instruction) and degraded fuel consumption.

### SUMMARY OF THE INVENTION

The invention has been made in view of the above-described problem and therefore has a purpose of providing an engine controller and an engine control method capable of controlling supercharging pressure while suppressing such a situation where exhaust pressure is overshot due to an operation of an NOx occlusion-reduction catalyst.

In order to solve the above-described conventional problem, the invention has following means.

The invention provides an engine controller as recited in claim 1 and an engine control method as recited in claim 3. The engine controller operates an exhaust flow rate adjustment mechanism to control supercharging pressure of an engine with a supercharger, the exhaust flow rate adjustment mechanism adjusting an exhaust gas flow rate through an exhaust route, and the supercharger driving a turbine by exhaust gas that flows through the exhaust route of the engine and supercharging air that flows through an intake route to the engine by a compressor coupled to the turbine. The engine controller includes: a deviation computation section that computes a deviation between an output value and a target value of the supercharging pressure; a proportional control term computation section that computes a proportional control term by multiplying the deviation by a proportional gain, the proportional control term being used to change an operation amount of the exhaust flow rate adjustment mechanism in proportion to the deviation; an integral control term computation section that computes an integral control term by multiplying time integration of the deviation by an integral gain, the integral control term being used to change the operation amount of the exhaust flow rate adjustment mechanism in proportion to the time integration of the deviation; and an operation amount computation section that adds the proportional control term and the integral control term to compute the operation amount of the exhaust flow rate adjustment mechanism. The exhaust route is provided with a NOx occlusion-reduction catalyst that occludes NOx in a lean combustion mode and reduces NOx in a rich combustion mode. The integral control term computation section initializes the time integration of the deviation to a specified value and computes the integral control term by multiplying the initialized time integration of the deviation by the integral gain at a time point at which a combustion mode of the NOx occlusion-reduction catalyst starts being shifted from the rich combustion mode to the lean combustion mode.

According to the invention, the integral control term computation section initializes the time integration of the deviation to the specified value at the time point at which the NOx occlusion-reduction catalyst starts being shifted from the rich combustion mode to the lean combustion mode. In this way, a change in (overshooting of) exhaust pressure, which possibly occurs at a time when the combustion mode is changed, can be alleviated or eliminated. That is, a supercharging pressure control system, to which the invention is applied, can appropriately control the supercharging pressure while suppressing such a situation where the exhaust pressure is overshot due to an operation of the NOx occlusion-reduction catalyst.

In addition, in the invention, the integral control term computation section preferably initializes the time integration of the deviation to the specified value and computes the integral control term by multiplying the specified value by the integral gain in the case where a pressure value of the exhaust gas exceeds a specified threshold value at the time point at which the combustion mode of the NOx occlusion-reduction catalyst starts being shifted from the rich combustion mode to the lean combustion mode.

Furthermore, in the invention, the proportional control term computation section:
computes the proportional control term by multiplying the deviation by a specified first proportional gain when the NOx occlusion-reduction catalyst is in the rich combustion mode;
computes the proportional control term by multiplying the deviation by a second proportional gain that is larger than the first proportional gain until shifting of the NOx occlusion-reduction catalyst from the rich combustion mode to the lean combustion mode is completed; and
computes the proportional control term by multiplying the deviation by a third proportional gain that is larger than the second proportional gain when the NOx occlusion-reduction catalyst is in the lean combustion mode.

Moreover, in the invention, the integral control term computation section:
computes the integral control term by multiplying the time integration of the deviation by a specified first integral gain when the NOx occlusion-reduction catalyst is in the rich combustion mode;
computes the integral control term by multiplying the time integration of the deviation by a second integral gain that is larger than the first integral gain until shifting of the NOx occlusion-reduction catalyst from the rich combustion mode to the lean combustion mode is completed; and
computes the integral control term by multiplying the time integration of the deviation by a third integral gain that is larger than the second integral gain when the NOx occlusion-reduction catalyst is in the lean combustion mode.

The invention as described so far is not limited to the above-described engine controller but can also be treated as an engine control method executed by the controller.

The invention can provide the engine controller and the engine control method capable of shifting the operation of the NOx occlusion-reduction catalyst from the rich combustion mode to the lean combustion mode while suppressing the overshooting of the exhaust pressure in the engine with the supercharger.

### BRIEF DESCRIPTION OF THE DRAWINGS

Fig. 1 is a view of an overall configuration of an engine control system in which an engine controller, to which the invention is applied, is embedded;
Fig. 2 is a diagram for explaining a specific configuration of a supercharging pressure control system that is realized by the engine controller, to which the invention is applied;
Fig. 3 is a flowchart for explaining a process flow that is executed by a determination section of a supercharging pressure control system;
Fig. 4 is a flowchart for explaining a process flow that is executed by a feedback gain decision section of the supercharging pressure control system;
Fig. 5 is a graph that represents a specific example of state transition of a combustion mode; and
Fig. 6 includes graphs that represent various time responses in an example according to the supercharging pressure control system.

### DETAILED DESCRIPTION OF THE INVENTION

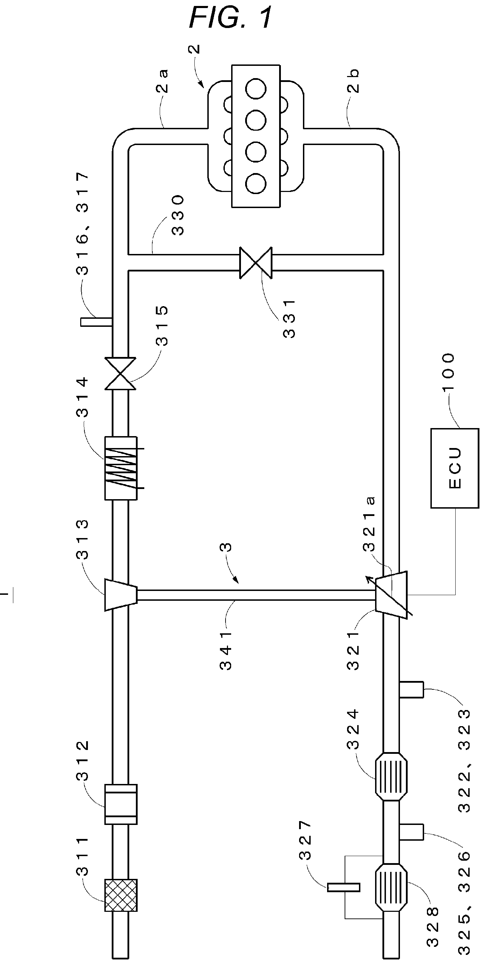

A description will be made on a mode for carrying out the invention (hereinafter referred to as this embodiment) by using a specific example. This embodiment relates to a controller for a diesel engine with a supercharger that is mounted in a vehicle or the like. More specifically, the controller is embedded in an engine control system 1 as depicted in Fig. 1, for example. A description will hereinafter be made on a configuration of the engine control system 1 and an operation thereof by focusing attention on supercharging pressure control for controlling supercharging pressure of air to be supercharged in an engine with reference to Fig. 1.

### <Engine control system>

As depicted in Fig. 1, the engine control system 1 includes: a diesel engine 2; an intake pipe 2a and an exhaust pipe 2b, each of which is connected to the diesel engine 2; a supercharger 3; and an engine control unit 100 (hereinafter referred to as an ECU 100).

The diesel engine 2 is an engine that uses diesel fuel as a power source. More specifically, the diesel engine 2 suctions ambient air (the air) from the intake pipe 2a that is an intake route connected to an ambient air inlet, combusts the diesel fuel to generate power, and discharges post-combustion exhaust gas to the exhaust pipe 2b that is an exhaust route.

From an upstream side to a downstream side (the diesel engine 2 side) of the intake pipe 2a, an air filter 311, a mass flow sensor 312, a compressor 313, an intercooler 314, a throttle valve 315, a supercharging pressure sensor 316, and an intake air temperature sensor 317 are provided. From an upstream side (the diesel engine 2 side) to a downstream side of the exhaust pipe 2b, a turbine 321, a first exhaust temperature sensor 322, a first lambda sensor 323, an NOx occlusion-reduction catalyst 324, a second exhaust temperature sensor 325, a second lambda sensor 326, a differential pressure sensor 327, and a diesel particulate filter 328 are provided.

In addition, the engine control system 1 is provided with an exhaust gas recirculation (EGR) route 330 to reduce NOx and the like in the exhaust gas. More specifically, the EGR route 330 is a route through which the exhaust gas is circulated from an exhaust port of the diesel engine 2 to an intake port of the diesel engine 2, and is provided with an EGR valve 331 for adjusting a circulation amount of the exhaust gas.

The air filter 311 removes dirt, dust, and the like from the air that is suctioned from the ambient air inlet so as to prevent foreign substances from being suctioned into the diesel engine 2.

The mass flow sensor 312 is a sensor for detecting an air amount flowing between the air filter 311 and the compressor 313 and informs the ECU 100 of a detected value of the air amount.

The compressor 313 and the turbine 321 are mechanically coupled via a bearing section 341 that supports the compressor 313 and the turbine 321 on the same rotary shaft. Due to such mechanical coupling, when the turbine 321 is rotationally driven by the exhaust gas that flows through the exhaust pipe 2b, the compressor 313 that is coupled to the turbine 321 is also rotationally driven. In this way, the air flowing through the intake pipe 2a is supercharged into the diesel engine 2. That is, the compressor 313, the turbine 321, and the bearing section 341 as a whole function as the supercharger 3 that supercharges the air into the diesel engine 2.

Here, the turbine 321 is provided with, as an exhaust flow rate adjustment mechanism that adjusts an exhaust flow rate, a variable nozzle turbo vane 321a (also referred to as a VNT vane) that changes an exhaust gas pass-through area of the turbine 321. As will be described below, the variable nozzle turbo vane 321a adjusts the exhaust flow rate when a vane opening degree thereof that corresponds to an opening area of the vane is controlled by a control signal from the ECU 100. The exhaust flow rate is adjusted, just as described, and a workload of the turbine 321 is thereby changed. As a result, a workload of the compressor 313 is also changed, and the supercharging pressure can thereby be controlled.

Note that the exhaust flow rate adjustment mechanism is not limited to the above variable nozzle turbo vane 321a. Instead, a bypass route that bypasses the exhaust route running through the turbine 321 may be provided, and the bypass route may be provided with a waste gate valve for adjusting the exhaust flow rate. As described above, when the waste gate valve is used as the exhaust flow rate adjustment mechanism, a valve opening degree of the waste gate valve is controlled by the ECU 100. Furthermore, instead of selecting either one of the variable nozzle turbo vane 321a and the waste gate valve, a combination thereof may be used as the exhaust flow rate adjustment mechanism.

The intercooler 314 cools the air that is compressed by the compressor 313 and delivers the cooled air to the throttle valve 315 side.

A valve opening degree of the throttle valve 315 is controlled by the ECU 100, so as to adjust an intake air amount to the diesel engine 2.

The supercharging pressure sensor 316 detects pressure (the supercharging pressure) of the air that is supercharged into the diesel engine 2 and informs the ECU 100 of the detected supercharging pressure (actual supercharging pressure).

The intake air temperature sensor 317 detects a temperature of the air that is supercharged into the diesel engine 2 and informs the ECU 100 of the detected temperature.

The first exhaust temperature sensor 322 and the first lambda sensor 323 are sensors that are provided in the exhaust route from the turbine 321 to the NOx occlusion-reduction catalyst 324. More specifically, the first exhaust temperature sensor 322 detects a temperature of the exhaust gas that is on an upstream side of the NOx occlusion-reduction catalyst 324, and informs the ECU 100 of the detected temperature. Meanwhile, the first lambda sensor 323 detects an air-fuel ratio of the exhaust gas that is on the upstream side of the NOx occlusion-reduction catalyst 324, and informs the ECU 100 of the detected air-fuel ratio.

The second exhaust temperature sensor 325 and the second lambda sensor 326 are sensors that are provided in the exhaust route from the NOx occlusion-reduction catalyst 324 to the diesel particulate filter 328. More specifically, the second exhaust temperature sensor 325 detects a temperature of the exhaust gas that is on a downstream side of the NOx occlusion-reduction catalyst 324, and informs the ECU 100 of the detected temperature. Meanwhile, the second lambda sensor 326 detects an air-fuel ratio of the exhaust gas that is on the downstream side of the NOx occlusion-reduction catalyst 324, and informs the ECU 100 of the detected air-fuel ratio.

The NOx occlusion-reduction catalyst 324 occludes NOx (nitrogen oxides) in the exhaust gas in a lean combustion mode and reduces and removes NOx in a rich combustion mode. In the lean combustion mode, the air-fuel ratio of the exhaust gas is in a lean state. In the rich combustion mode, the air-fuel ratio of the exhaust gas is in a rich state.

The differential pressure sensor 327 detects differential pressure between an upstream side and a downstream side of the diesel particulate filter 328 and informs the ECU 100 of the detected differential pressure.

The diesel particulate filter 328 collects particulate substances contained in the exhaust gas and discharges the exhaust gas, from which an amount of the particulate substances is reduced, to the downstream side of the exhaust pipe 2b. Along with collection of the particulate substances, a filter function of the diesel particulate filter 328 is degraded, and the differential pressure, which is detected by the differential pressure sensor 327, is increased. However, the filter function can be restored by combusting the particulate substances.

The ECU 100 is a microcomputer that includes input/output interfaces, an arithmetic processor for performing various types of arithmetic processes, a main memory for temporarily storing arithmetic processing data, and a storage for storing arithmetic programs, and realizes the following process when a control program for controlling the engine control system 1 is installed in the main memory. That is, the ECU 100 controls operations of the diesel engine 2 and the supercharger 3 by adjusting a fuel injection amount that is injected into the diesel engine 2 and the opening degrees of the various valve, vane, and the throttle on the basis of operation information by a driver, such as an accelerator pedal position, and detection information from the various sensors. That is, the controller for the diesel engine with the supercharger, to which the invention is applied, is realized as one function of the ECU 100.

In addition, the ECU 100 causes the NOx occlusion-reduction catalyst 324 to occlude NOx in the lean combustion mode, changes the combustion mode to the rich combustion mode at specified timing on the basis of the detection information from the various sensors or the like at a time when an occluded NOx amount is increased, and controls the fuel injection amount and the opening degrees of the various valve, vane, and the throttle so as to reduce the air-fuel ratio to be lower than a theoretical air-fuel ratio. Furthermore, when determining that regeneration of the diesel particulate filter 328 by combustion is necessary on the basis of the differential pressure between the upstream side and the downstream side thereof or the like, the ECU 100 adjusts the fuel injection amount and the opening degrees of the various valve, vane, and throttle to reduce the intake air amount. In this way, the temperature of the exhaust gas is increased to a specified temperature or higher by using thermal energy obtained through an operation of the diesel engine 2.

Note that the ECU 100 is not limited to the above-described microprocessor but may be dedicated hardware, such as a programmable logic device, that is designed to control the engine control system 1.

### <Supercharging pressure control system>

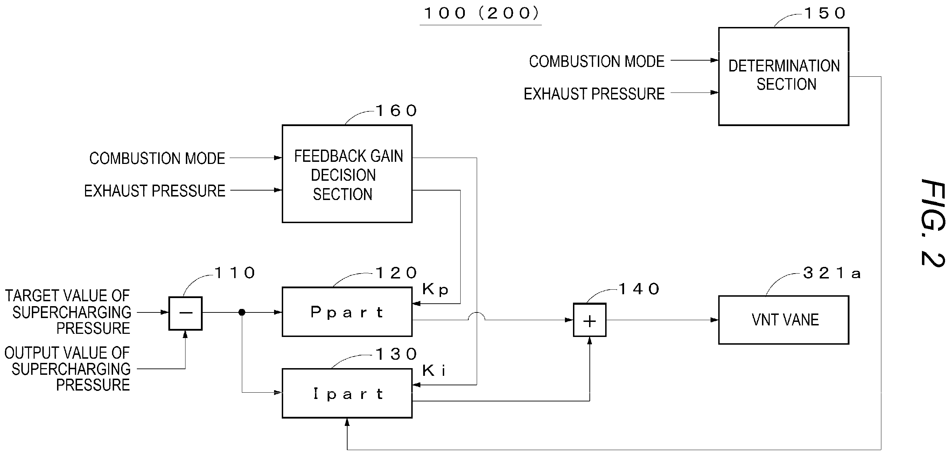

A description will hereinafter be made on a supercharging pressure control system 200 for controlling the supercharging pressure by a PI control system among functions realized by the above-described ECU 100 with reference to Fig. 2.

As depicted in Fig. 2, as a function of realizing the supercharging pressure control system 200, the ECU 100 includes a deviation computation section 110, a proportional control term computation section 120, an integral control term computation section 130, an operation amount computation section 140, a determination section 150, and a feedback gain decision section 160.

The deviation computation section 110 computes a deviation between an output value and a target value of the supercharging pressure. Here, the output value is the actual supercharging pressure that is detected by the above-described supercharging pressure sensor 316. In addition, the target value is target supercharging pressure that is set by the ECU 100 on the basis of information, such as accelerator pedal position information representing the acceleration instruction by the driver, the fuel injection amount of the diesel fuel injected into a cylinder of the diesel engine 2, and an engine speed. The proportional control term computation section 120 and the integral control term computation section 130 are informed of the deviation that is computed by the deviation computation section 110.

The proportional control term computation section 120 computes a proportional control term that changes an operation amount of the variable nozzle turbo vane 321a in proportion to the deviation that is informed from the above-described deviation computation section 110. More specifically, the proportional control term computation section 120 computes the proportional control term by multiplying the deviation by a proportional gain Kp and informs the operation amount computation section 140 of the proportional control term. Here, as will be described below, a value that is decided by the feedback gain decision section 160 is used as the proportional gain Kp.

The integral control term computation section 130 computes an integral control term that changes the operation amount of the variable nozzle turbo vane 321a in proportion to time integration of the deviation that is informed from the above-described deviation computation section 110. More specifically, the integral control term computation section 130 integrates the deviation, which is changed in time, over a specified time, computes the integral control term by multiplying the time integration by an integral gain Ki, and informs the operation amount computation section 140 of the integral control term. Here, the integral control term computation section 130 initializes the time integration to a specified value, such as 0, in accordance with a determination result by the determination section 150, which will be described below. As will be described below, a value that is decided by the feedback gain decision section 160 is used as the integral gain Ki.

The operation amount computation section 140 computes the operation amount of the variable nozzle turbo vane 321a by adding the proportional control term, which is informed from the proportional control term computation section 120, and the integral control term, which is informed from the integral control term computation section 130. When a drive signal that corresponds to the computed operation amount is output from the ECU 100 to the variable nozzle turbo vane 321a, the vane opening degree of the variable nozzle turbo vane 321a is changed in a manner to follow the operation amount that is computed by the operation amount computation section 140.

The determination section 150 determines whether each of the combustion mode and the exhaust pressure satisfies a specified condition and instructs the integral control term computation section 130 to initialize the time integration of the deviation in accordance with the determination result.

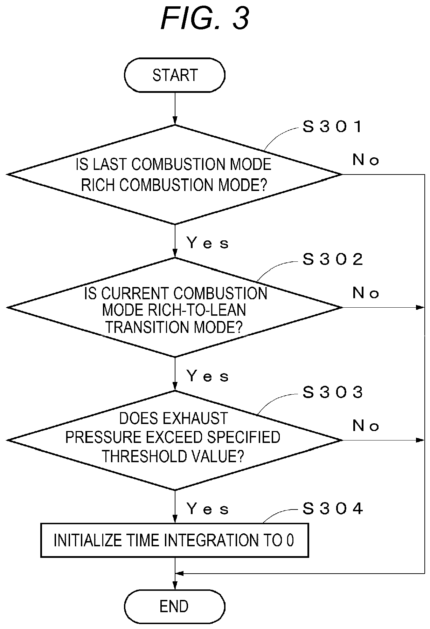

More specifically, the determination section 150 executes a process depicted in the flowchart in Fig. 3 at every sampling time that is determined in advance.

In step S301, the determination section 150 determines whether the last combustion mode is the rich combustion mode. More specifically, if the combustion mode at the last sample time is the rich combustion mode, it is determined that the last combustion mode is the rich combustion mode. If the last combustion mode is the rich combustion mode (S301: Yes), the process proceeds to step S302. On the other hand, if the last combustion mode is not the rich combustion mode, that is, if the last combustion mode is the lean combustion mode or a combustion mode in which the air-fuel ratio is shifted from a rich state to a lean state (hereinafter referred to as a rich-to-lean transition mode), the process does not proceed to steps S302 to S304, and the process depicted in Fig. 3 is terminated.

In step S302, the determination section 150 determines whether the current combustion mode is the rich-to-lean transition mode. If the current combustion mode is the rich-to-lean transition mode in this step (S302: Yes), the process proceeds to step S303. If the current combustion mode is not the rich-to-lean transition mode, for example, if the current combustion mode remains to be the rich combustion mode like the last sample time (S302: No), the process does not proceed to step S303 or step S304, and the process depicted in Fig. 3 is terminated.

In step S303, the determination section 150 determines whether the exhaust pressure exceeds a specified threshold value. More specifically, the determination section 150 sets a pressure value that is lower than an upper limit pressure value by a specified margin as the threshold value in advance, the upper limit pressure value being allowed by the hardware in the engine control system 1. Then, it is determined in this step whether the exhaust pressure on the upstream side of the turbine 321, which is estimated from a physical model on the basis of detection results of the various sensors, exceeds the above threshold value, which is set in advance. If the exhaust pressure exceeds the threshold value (S303: Yes), the process proceeds to step S304. On the other hand, if the exhaust pressure does not exceed the threshold value (S303: No), the process does not proceed to step S304, and the process depicted in Fig. 3 is terminated.

In step S304, the determination section 150 instructs the integral control term computation section 130 to initialize the time integration to 0, and the process depicted in Fig. 3 is terminated. Note that the time integration does not always have to be initialized to 0 but may be initialized to an arbitrary setting value in accordance with an operation state of the diesel engine 2.

The determination section 150 executes the above process depicted in Fig. 3. If both conditions of step S301 and step S302 are satisfied, in other words, only if the exhaust pressure exceeds the threshold value (S303: Yes) at a time point at which the NOx occlusion-reduction catalyst starts being shifted from the rich combustion mode to the lean combustion mode, the integral control term computation section 130 initializes the time integration of the deviation to the specified value. Just as described, the integral control term computation section 130 initializes the time integration of the deviation to the specified value. In this way, as it is apparent from a time response according to an example, which will be described below, a change in (overshooting of) the exhaust pressure, which possibly occurs at a time when the combustion mode is changed, can be alleviated or eliminated.

Note that, if the condition of step S302 is satisfied (S302: Yes), the process may proceed to step S304 instead of proceeding to step S303, and the integral control term computation section 130 may initialize the time integration of the deviation to the specified value. However, step S303 is preferably performed. This is because unnecessary degradation of responsiveness of the supercharging pressure can be prevented by performing step S304 only when the exhaust pressure exceeds the threshold value. Degradation of a follow-up characteristic to the target supercharging pressure is prevented as described above. As a result, degradation of drivability and exhaust performance, such as degraded responsiveness in accordance with an accelerator pedal operation (the acceleration instruction) and degraded fuel consumption, can further be prevented.

The feedback gain decision section 160 decides a specified feedback gain from plural feedback gains, which are set in advance, in accordance with the combustion mode of the NOx occlusion-reduction catalyst 324 and informs the proportional control term computation section 120 and the integral control term computation section 130 of the decided feedback gain.

Prior to a description on a feedback gain decision process, a description will first be made on the feedback gain that is used in the decision process.

For the proportional gain Kp, three types of proportional gains Kp1, Kp2, Kp3 are set in advance under a magnitude relationship as follows. That is, the feedback gain decision section 160 sets the proportional gain Kp in advance such that the magnitude relationship among the first proportional gain Kp1, the second proportional gain Kp2, and the third proportional gain Kp3 satisfies Kp1 < Kp2 < Kp3. As it is apparent from such a magnitude relationship, the first proportional gain Kp1 has the lowest sensitivity, the third proportional gain Kp3 has the highest sensitivity, and sensitivity of the second proportional gain Kp2 is located between Kp1 and Kp3.

For the integral gain Ki, three types of integral gains Ki1, Ki2, Ki3 are set in advance under a magnitude relationship as follows. That is, the feedback gain decision section 160 sets the integral gain Ki in advance such that the magnitude relationship among the first integral gain Ki1, the second integral gain Ki2, and the third integral gain Ki3 satisfies Ki1 < Ki2 < Ki3. As it is apparent from such a magnitude relationship, the first integral gain Ki1 has the lowest sensitivity, the third integral gain Ki3 has the highest sensitivity, and sensitivity of the second integral gain Ki2 is located between Ki1 and Ki3.

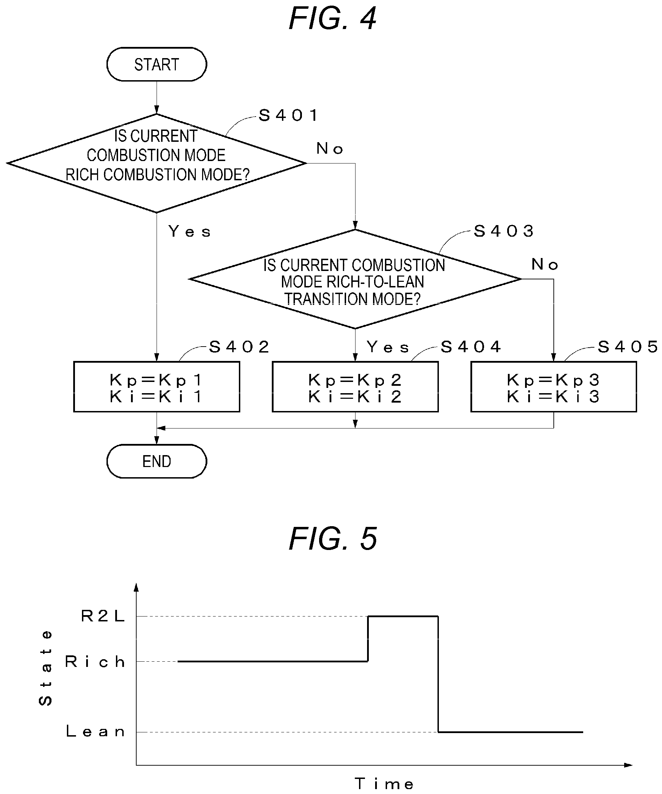

Next, a description will be made on a feedback gain decision method by using a flowchart depicted in Fig. 4. That is, the feedback gain decision section 160 executes a process depicted in the flowchart in Fig. 4 at every sampling time that is determined in advance.

In step S401, the feedback gain decision section 160 determines whether the current combustion mode is the rich combustion mode. If the current combustion mode is the rich combustion mode (S401: Yes), the process proceeds to step S402. On the other hand, if the current combustion mode is not the rich combustion mode (S401: No), the process proceeds to step S403.

In step S402, the feedback gain decision section 160 decides the first proportional gain Kp1 with the low sensitivity as the proportional gain Kp and decides the first integral gain Ki1 with the low sensitivity as the integral gain Ki due to the following reason. Then, the process in Fig. 4 is terminated. Compared to the lean combustion mode, the exhaust gas is high in enthalpy in the rich combustion mode. Thus, it is preferred to suppress the sensitivity of the supercharging pressure to the operation amount of the variable nozzle turbo vane 321a.

The proportional control term computation section 120 and the integral control term computation section 130 are informed of the feedback gains that are decided in this step S402, and the following process is performed. More specifically, the proportional control term computation section 120 computes the proportional control term by multiplying the deviation, which is computed by the deviation computation section 110, by the first proportional gain Kp1. In addition, the integral control term computation section 130 computes the integral control term by multiplying the time integration of the deviation, which is computed by the deviation computation section 110, by the first integral gain Ki1.

In step S403, the feedback gain decision section 160 determines whether the current combustion mode is the rich-to-lean transition mode. If the current combustion mode is the rich-to-lean transition mode (S403: Yes), the process proceeds to step S404. On the other hand, if the current combustion mode is not the rich-to-lean transition mode (S403: No), that is, a lean transition mode, the process proceeds to step S405.

In step S404, the feedback gain decision section 160 decides the second proportional gain Kp2 with the middle sensitivity as the proportional gain Kp and decides the second integral gain Ki2 with the middle sensitivity as the integral gain Ki due to the following reason. Then, the process depicted in Fig. 4 is terminated. Compared to the rich combustion mode, the exhaust gas is low in enthalpy in the rich-to-lean transition mode. Thus, it is preferred to increase the sensitivity of the supercharging pressure to the operation amount of the variable nozzle turbo vane 321a.

The proportional control term computation section 120 and the integral control term computation section 130 are informed of the feedback gains that are decided in this step S404, and the following process is performed. More specifically, the proportional control term computation section 120 computes the proportional control term by multiplying the deviation, which is computed by the deviation computation section 110, by the second proportional gain Kp2. In addition, the integral control term computation section 130 computes the integral control term by multiplying the time integration of the deviation, which is computed by the deviation computation section 110, by the second integral gain Ki2.

In step S405, the feedback gain decision section 160 decides the third proportional gain Kp3 with the high sensitivity as the proportional gain Kp and decides the third integral gain Ki3 with the high sensitivity as the integral gain Ki due to the following reason. Then, the process depicted in Fig. 4 is terminated. Compared to the rich combustion mode, the exhaust gas is further low in enthalpy in the lean combustion mode. Thus, it is preferred to further increase the sensitivity of the supercharging pressure to the operation amount of the variable nozzle turbo vane 321a.

The proportional control term computation section 120 and the integral control term computation section 130 are informed of the feedback gains that are decided in this step S405, and the following process is performed. More specifically, the proportional control term computation section 120 computes the proportional control term by multiplying the deviation, which is computed by the deviation computation section 110, by the third proportional gain Kp3. In addition, the integral control term computation section 130 computes the integral control term by multiplying the time integration of the deviation, which is computed by the deviation computation section 110, by the third integral gain Ki3.

The feedback gain decision section 160 executes the process depicted in Fig. 4 and switches the feedback gains at three stages in accordance with state transition of the combustion mode. In this way, influences of the changes in the supercharging pressure, the exhaust pressure, and the like at the time when the combustion mode is changed can be alleviated or eliminated. That is, while overshooting of the exhaust pressure is suppressed, the operation of the NOx occlusion-reduction catalyst 324 can be shifted from the rich combustion mode to the lean combustion mode.

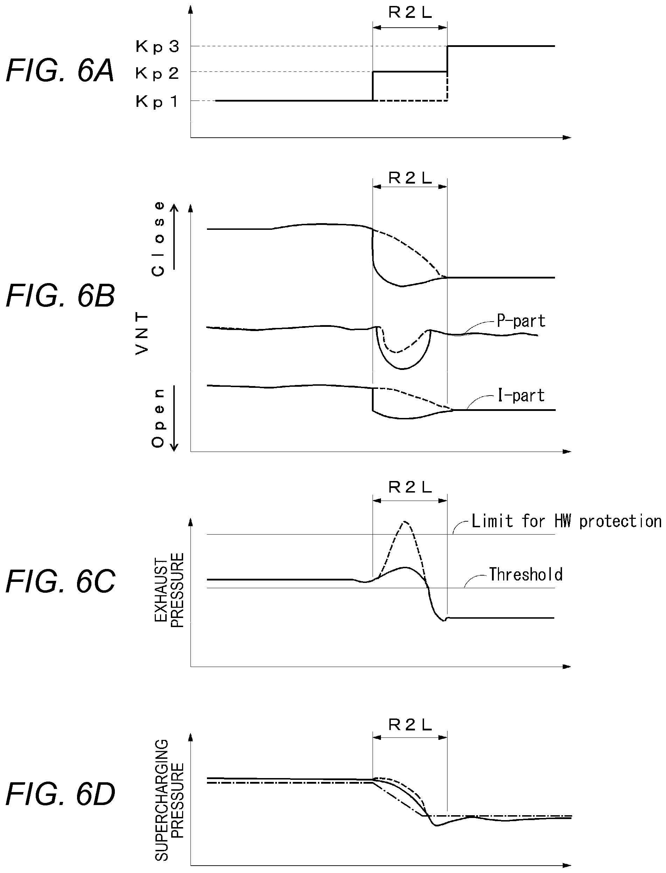

Next, as depicted in Fig. 5, the various time responses at a time when the combustion mode is changed in an order of a rich combustion mode Rich, a rich-to-lean transition mode R2L, and a lean combustion mode Lean will be evaluated. Fig. 6 depicts one example of the above time responses. As the embodiment, solid lines represent the various time responses of the supercharging pressure control system 200. As a comparative example, broken lines represent the various time responses of a case where the supercharging pressure is controlled without considering the rich-to-lean transition mode.

More specifically, Fig. 6A is a graph in which a horizontal axis represents time and a vertical axis represents changes (a solid line, a broken line) in the proportional gain Kp as one example of a change in the feedback gain. As depicted in Fig. 6A, in the embodiment, the first proportional gain Kp1, the second proportional gain Kp2, and third proportional gain Kp3 are switched in this order in accordance with the order of the state transition of the rich combustion mode Rich, the rich-to-lean transition mode R2L, and the lean combustion mode Lean. Meanwhile, in the comparative example, the first proportional gain Kp1 is used in the rich combustion mode Rich to the rich-to-lean transition mode R2L and is switched to the third proportional gain Kp3 in accordance with the state transition to the lean combustion mode Lean.

Fig. 6B is a graph in which a horizontal axis represents the time and a vertical axis represents operation amounts Command_to_VNT of the variable nozzle turbo vane 321a (a solid line, a broken line). Fig. 6B also depicts a time response of each of a proportional control term P-part and an integral control term I-part.

In the embodiment, the time integration is initialized at a time point at which the rich combustion mode Rich starts being shifted to the rich-to-lean transition mode R2L. Thus, as depicted in Fig. 6B, the time response of the integral control term I-part is not influenced by the deviation under the rich combustion mode Rich and is promptly changed to a valve open side Open. In addition, in the embodiment, the feedback gains are switched to the second proportional gain Kp2 and the second integral gain Ki2 for the rich-to-lean transition mode R2L. Thus, the time responses of the proportional control term P-part and the integral control term I-part are promptly changed to the valve open side Open.

Meanwhile, in the comparative example, the time integration is not initialized even when the rich combustion mode Rich is shifted to the rich-to-lean transition mode R2L. In addition, in the rich-to-lean transition mode R2L, the supercharging pressure is controlled by the same feedback gains (the first proportional gain Kp1, the first integral gain Ki1) as those in the rich combustion mode Rich. Thus, when time at which the rich-to-lean transition mode R2L is started is set as a starting point, a longer time is required to change the variable nozzle turbo vane 321a to the valve open side Open in the comparative example than in the embodiment.

As it is apparent from the operation amount Command_to_VNT in Fig. 6B, the variable nozzle turbo vane 321a in the rich-to-lean transition mode R2L is more promptly changed to the valve open side Open in the embodiment than in the comparative example. Thus, as depicted in Fig. 6C and Fig. 6D, the time responses of the exhaust pressure and the supercharging pressure differ.

Fig. 6C is a graph in which a horizontal axis represents the time and a vertical axis represents the changes in the exhaust pressure (a solid line, a broken line). In Fig. 6C, an upper limit value Limit_for_HW_protection of hardware protection and a threshold value Threshold that is used in step S303 are also depicted. As depicted in Fig. 6C, in the embodiment, when the time at which the rich-to-lean transition mode R2L is started is set as a starting point, the variable nozzle turbo vane 321a can smoothly be operated to the valve open side Open. Thus, since the exhaust pressure is not significantly overshot, a situation where the upper limit value Limit_for_HW_protection is exceeded can be avoided. Meanwhile, in the comparative example, when the time at which the rich-to-lean transition mode R2L is started is set as a starting point, a time is required to operate variable nozzle turbo vane 321a from a valve close side Close to the valve open side Open. Thus, the exhaust pressure is significantly overshot and exceeds the upper limit value Limit_for_HW_protection.

In Fig. 6D, a horizontal axis represents the time, and a vertical axis represents the target supercharging pressure (a one-dot chain line) and the actual supercharging pressure (a solid line, a broken line) . As depicted in Fig. 6D, in the example (the solid line), the supercharging pressure follows the target supercharging pressure in the rich-to-lean transition mode R2L when compared to the comparative example (the broken line). In other words, it is understood that irrespective of the state transition of the combustion mode, follow-up performance to the target supercharging pressure is higher in the example than in the comparative example.

As it is apparent from the various time responses depicted in Fig. 6C and Fig. 6D, which have been described above, in the example, the time integration in integral control is initialized, and the feedback gains are switched in consideration of such a point that an internal state is drastically changed as in the rich-to-lean transition mode R2L. Accordingly, compared to the comparative example, the supercharging pressure can be controlled in the embodiment while overshooting of the exhaust pressure is suppressed. That is, in the embodiment, the supercharging pressure can appropriately be controlled while a situation where the exhaust pressure is overshot due to the operation of the NOx occlusion-reduction catalyst is suppressed.

### <Others>

Application of the supercharging pressure control system, to which the invention is applied, is not limited to a case where the above-described proportional control and integration control are executed. The supercharging pressure control system may be applied to a so-called PID control system in which the proportional control, the integral control, and differential control are combined. More specifically, in regard to P control (the proportional control) and I control (the integral control), the operation amount only needs to be computed in a similar manner to computation in the proportional control term computation section 120 and the integral control term computation section 130 described above. In addition, in regard to D control (the differential control), a differential gain Kd that corresponds to three types of the rich combustion mode, the rich-to-lean transition mode, and the lean combustion mode, for example, is set, and the differential gain Kd only needs to be switched stepwise in accordance with the transition of the combustion mode.

The actual supercharging pressure is not limited to the value that is estimated from the value obtained by the above-described supercharging pressure sensor 316, but a value that is estimated from the value obtained by any of the various sensors provided in the engine control system 1 may be used. In addition, the exhaust pressure is not limited to a case where the value that is estimated from the value obtained by any of the various sensors provided in the engine control system 1 is used. For example, a pressure sensor that detects the exhaust pressure may be provided between the diesel engine 2 and the variable nozzle turbo vane 321a, and a detected value of the pressure sensor may be used as the exhaust pressure.

Furthermore, the invention may be realized by providing a non-temporary recording medium, in which an engine control program that realizes the functions of the above-described embodiment is recorded, in the ECU and causing a processing unit (a CPU, an MPU) of the ECU to read out and execute the engine control program that is recorded in the recording medium.

In this case, the engine control program that is read out from the non-temporary recording medium realizes the functions of the above-described embodiment. Thus, the engine control program and the non-temporary recording medium, in which this program is recorded, also serve as one aspect of the invention.

As the non-temporary recording medium that provides the engine control program, for example, a flexible disc, a hard disc, a magnet-optical disc, an optical disc such as CD-ROM, CD-R, CD-RW, DVD-ROM, DVD-RAM, DVD-RW, and DVD+RW, a magnetic tape, a non-volatile memory card, and a ROM are included. Alternatively, the program may be downloadable via a communication network.

The invention has been described with reference to the typical embodiment. It is needless to say that the invention is not limited to the typical embodiment disclosed herein.

## Claims

1. An engine controller (100) that operates an exhaust flow rate adjustment mechanism (321a) to control supercharging pressure of an engine (2) with a supercharger (3), the exhaust flow rate adjustment mechanism (321a) adjusting an exhaust gas flow rate through an exhaust route (2b), and the supercharger (3) driving a turbine (321) by exhaust gas that flows through the exhaust route (2b) of the engine (2) and supercharging air that flows through an intake route (2a) to the engine (2) by a compressor (313) coupled to the turbine (321), the engine controller (100) comprising:
a deviation computation section (110) that computes a deviation between an output value and a target value of the supercharging pressure; a proportional control term computation section (120) that computes a proportional control term by multiplying the deviation by a proportional gain, the proportional control term being used to change an operation amount of the exhaust flow rate adjustment mechanism (321a) in proportion to the deviation; an integral control term computation section (130) that computes an integral control term by multiplying time integration of the deviation by an integral gain, the integral control term being used to change the operation amount of the exhaust flow rate adjustment mechanism (321a) in proportion to the time integration of the deviation; and
an operation amount computation section (140) that adds the proportional control term and the integral control term to compute the operation amount of the exhaust flow rate adjustment mechanism (321a), wherein
the exhaust route (2b) is provided with an NOx occlusion-reduction catalyst that occludes NOx in a lean combustion mode and reduces NOx in a rich combustion mode,
the integral control term computation section (130) initializes the time integration of the deviation to a specified value and computes the integral control term by multiplying the initialized time integration of the deviation by the integral gain at a time point at which the NOx occlusion-reduction catalyst starts being shifted from the rich combustion mode to the lean combustion mode, and
the proportional control term computation section (120) :
computes the proportional control term by multiplying the deviation by a specified first proportional gain when the NOx occlusion-reduction catalyst is in the rich combustion mode,
computes the proportional control term by multiplying the deviation by a second proportional gain that is larger than the first proportional gain until shifting of the NOx occlusion-reduction catalyst from the rich combustion mode to the lean combustion mode is completed, and
computes the proportional control term by multiplying the deviation by a third proportional gain that is larger than the second proportional gain when the NOx occlusion-reduction catalyst is in the lean combustion mode;
or
the integral control term computation section (130):
computes the integral control term by multiplying the time integration of the deviation by a specified first integral gain when the NOx occlusion-reduction catalyst is in the rich combustion mode;
computes the integral control term by multiplying the time integration of the deviation by a second integral gain that is larger than the first integral gain until shifting of the NOx occlusion-reduction catalyst from the rich combustion mode to the lean combustion mode is completed; and
computes the integral control term by multiplying the time integration of the deviation by a third integral gain that is larger than the second integral gain when the NOx occlusion-reduction catalyst is in the lean combustion mode.

2. The engine controller (100) according to claim 1, wherein
the integral control term computation section (130) initializes the time integration of the deviation to the specified value and computes the integral control term by multiplying the specified value by the integral gain in the case where a pressure value of the exhaust gas exceeds a specified threshold value at the time point at which the NOx occlusion-reduction catalyst starts being shifted from the rich combustion mode to the lean combustion mode.

3. An engine control method that
operates an exhaust flow rate adjustment mechanism (321a) to control supercharging pressure of an engine (2) with a supercharger (3), the exhaust flow rate adjustment mechanism (321a) adjusting an exhaust gas flow rate through an exhaust route (2b), and the supercharger (3) driving a turbine (321) by exhaust gas that flows through the exhaust route (2b) of the engine (2) and supercharging air that flows through an intake route (2a) to the engine (2) by a compressor (313) coupled to the turbine (321), the engine (2) control method comprising: computing a deviation between an output value and a target value of the supercharging pressure;
computing a proportional control term by multiplying the deviation by a proportional gain, the proportional control term being used to change an operation amount of the exhaust flow rate adjustment mechanism (321a) in proportion to the deviation;
computing an integral control term by multiplying time integration of the deviation by an integral gain, the integral control term being used to change the operation amount of the exhaust flow rate adjustment mechanism (321a) in proportion to the time integration of the deviation; and
adding the proportional control term and the integral control term to compute the operation amount of the exhaust flow rate adjustment mechanism (321a), wherein
the exhaust route (2b) is provided with an NOx occlusion-reduction catalyst that occludes NOx in a lean combustion mode and reduces NOx in a rich combustion mode,
in the step of computing the integral control term, the time integration of the deviation is initialized to a specified value, and the integral control term is computed by multiplying the initialized time integration of the deviation by the integral gain at a time point at which the NOx occlusion-reduction catalyst starts being shifted from the rich combustion mode to the lean combustion mode; the proportional control term is computed by multiplying the deviation by a specified first proportional gain when the NOx occlusion-reduction catalyst is in the rich combustion mode,
the proportional control term is computed by multiplying the deviation by a second proportional gain that is larger than the first proportional gain until shifting of the NOx occlusion-reduction catalyst from the rich combustion mode to the lean combustion mode is completed, and
the proportional control term is computed by multiplying the deviation by a third proportional gain that is larger than the second proportional gain when the NOx occlusion-reduction catalyst is in the lean combustion mode;
or
the integral control term is computed by multiplying the time integration of the deviation by a specified first integral gain when the NOx occlusion-reduction catalyst is in the rich combustion mode;
the integral control term is computed by multiplying the time integration of the deviation by a second integral gain that is larger than the first integral gain until shifting of the NOx occlusion-reduction catalyst from the rich combustion mode to the lean combustion mode is completed; and
the integral control term is computed by multiplying the time integration of the deviation by a third integral gain that is larger than the second integral gain when the NOx occlusion-reduction catalyst is in the lean combustion mode.

## Patentansprüche

1. Motorsteuergerät (100), das einen Abgasdurchsatz-Einstellmechanismus (321a) zur Steuerung des Aufladedrucks eines Motors (2) mit einem Auflader (3) betätigt, wobei der Abgasdurchsatz-Einstellmechanismus (321a) einen Abgasdurchsatz durch einen Abgasweg (2b) einstellt und der Auflader (3) eine Turbine (321) durch Abgas antreibt, das durch den Abgasweg (2b) des Motors (2) strömt, und durch Aufladeluft, die von einem mit der Turbine (321) gekoppelten Verdichter (313) durch einen Einlassweg (2a) zu dem Motor (2) strömt, wobei das Motorsteuergerät (100) Folgendes umfasst:
einen Abschnitt (110) zur Berechnung einer Abweichung, der eine Abweichung zwischen einem Ausgangswert und einem Zielwert des Aufladedrucks berechnet; einen Abschnitt (120) zur Berechnung einer proportionalen Steuerungsbedingung, der eine proportionale Steuerungsbedingung durch Multiplizieren der Abweichung mit einer Proportionalverstärkung berechnet, wobei die proportionale Steuerungsbedingung genutzt wird, um einen Betriebsbetrag des Abgasdurchsatz-Einstellmechanismus (321a) im Verhältnis zu der Abweichung zu verändern; einen Abschnitt (130) zur Berechnung einer integralen Steuerungsbedingung, der eine integrale Steuerungsbedingung durch Multiplizieren der Zeitintegration der Abweichung mit einer Integralverstärkung berechnet, wobei die integrale Steuerungsbedingung genutzt wird, um den Betriebsbetrag des Abgasdurchsatz-Einstellmechanismus (321a) im Verhältnis zu der Zeitintegration der Abweichung zu verändern; und
einen Abschnitt (140) zur Berechnung eines Betriebsbetrags, der die proportionale Steuerungsbedingung und die integrale Steuerungsbedingung addiert, um den Betriebsbetrag des Abgasdurchsatz-Einstellmechanismus (321a) zu berechnen, wobei
der Abgasweg (2b) mit einem NOx-Okklusions-Reduktions-Katalysator versehen ist, der NOx in einem Modus einer mageren Verbrennung okkludiert und NOx in einem Modus einer fetten Verbrennung reduziert,
der Abschnitt (130) zur Berechnung einer integralen Steuerungsbedingung die Zeitintegration der Abweichung auf einen spezifizierten Wert initialisiert und die integrale Steuerungsbedingung durch Multiplizieren der initialisierten Zeitintegration der Abweichung mit der Integralverstärkung zu einem Zeitpunkt berechnet, zu dem der NOx-Okklusions-Reduktions-Katalysator beginnt, von dem Modus einer fetten Verbrennung in den Modus einer mageren Verbrennung geschaltet zu werden, und
der Abschnitt (120) zur Berechnung einer proportionalen Steuerungsbedingung:
die proportionale Steuerungsbedingung durch Multiplizieren der Abweichung mit einer spezifizierten ersten Proportionalverstärkung berechnet, wenn sich der NOx-Okklusions-Reduktions-Katalysator in dem Modus einer fetten Verbrennung befindet,
die proportionale Steuerungsbedingung durch Multiplizieren der Abweichung mit einer zweiten Proportionalverstärkung berechnet, die größer als die erste Proportionalverstärkung ist, bis das Schalten des NOx-Okklusions-Reduktions-Katalysators von dem Modus einer fetten Verbrennung in den Modus einer mageren Verbrennung abgeschlossen ist, und
die proportionale Steuerungsbedingung durch Multiplizieren der Abweichung mit einer dritten Proportionalverstärkung berechnet, die größer als die zweite Proportionalverstärkung ist, wenn sich der NOx-Okklusions-Reduktions-Katalysator in dem Modus einer mageren Verbrennung befindet;
oder
der Abschnitt (130) zur Berechnung einer integralen Steuerungsbedingung:
d ie integrale Steuerungsbedingung durch Multiplizieren der Zeitintegration der Abweichung mit einer spezifizierten ersten Integralverstärkung berechnet, wenn sich der NOx-Okklusions-Reduktions-Katalysator in dem Modus einer fetten Verbrennung befindet,
d ie integrale Steuerungsbedingung durch Multiplizieren der Zeitintegration der Abweichung mit einer zweiten Integralverstärkung berechnet, die größer als die erste Integralverstärkung ist, bis das Schalten des NOx-Okklusions-Reduktions-Katalysators von dem Modus einer fetten Verbrennung in den Modus einer mageren Verbrennung abgeschlossen ist, und
d ie integrale Steuerungsbedingung durch Multiplizieren der Zeitintegration der Abweichung mit einer dritten Integralverstärkung berechnet, die größer als die zweite Integralverstärkung ist, wenn sich der NOx-Okklusions-Reduktions-Katalysator in dem Modus einer mageren Verbrennung befindet.

2. Motorsteuergerät (100) nach Anspruch 1, wobei
der Abschnitt (130) zur Berechnung einer integralen Steuerungsbedingung die Zeitintegration der Abweichung von dem spezifizierten Wert initialisiert und die integrale Steuerungsbedingung durch Multiplizieren des spezifizierten Wertes mit der Integralverstärkung in dem Fall berechnet, in dem ein Druckwert des Abgases einen spezifizierten Schwellenwert zu dem Zeitpunkt überschreitet, zu dem der NOx-Okklusions-Reduktions-Katalysator beginnt, von dem Modus einer fetten Verbrennung in den Modus einer mageren Verbrennung geschaltet zu werden.

3. Verfahren zur Steuerung eines Motors, das
einen Abgasdurchsatz-Einstellmechanismus (321a) zur Steuerung des Aufladedrucks eines Motors (2) mit einem Auflader (3) betätigt, wobei der Abgasdurchsatz-Einstellmechanismus (321a) einen Abgasdurchsatz durch einen Abgasweg (2b) einstellt und der Auflader (3) eine Turbine (321) durch Abgas antreibt, das durch den Abgasweg (2b) des Motors (2) strömt, und durch Aufladeluft, die von einem mit der Turbine (321) gekoppelten Verdichter (313) durch einen Einlassweg (2a) zu dem Motor (2) strömt, wobei das Verfahren zur Steuerung eines Motors (2) Folgendes umfasst: Berechnen einer Abweichung zwischen einem Ausgangswert und einem Zielwert des Aufladedrucks;
Berechnen einer proportionalen Steuerungsbedingung durch Multiplizieren der Abweichung mit einer Proportionalverstärkung, wobei die proportionale Steuerungsbedingung genutzt wird, um einen Betriebsbetrag des Abgasdurchsatz-Einstellmechanismus (321a) im Verhältnis zu der Abweichung zu verändern; Berechnen einer integralen Steuerungsbedingung durch Multiplizieren der Zeitintegration der Abweichung mit einer Integralverstärkung, wobei die integrale Steuerungsbedingung genutzt wird, um den Betriebsbetrag des Abgasdurchsatz-Einstellmechanismus (321a) im Verhältnis zu der Zeitintegration der Abweichung zu verändern; und
Addieren der proportionalen Steuerungsbedingung und der integralen Steuerungsbedingung, um den Betriebsbetrag des Abgasdurchsatz-Einstellmechanismus (321a) zu berechnen, wobei
der Abgasweg (2b) mit einem NOx-Okklusions-Reduktions-Katalysator versehen ist, der NOx in einem Modus einer mageren Verbrennung okkludiert und NOx in einem Modus einer fetten Verbrennung reduziert,
in dem Schritt des Berechnens der integralen Steuerungsbedingung die Zeitintegration der Abweichung auf einen spezifizierten Wert initialisiert wird und die integrale Steuerungsbedingung durch Multiplizieren der initialisierten Zeitintegration der Abweichung mit der Integralverstärkung zu einem Zeitpunkt berechnet wird, zu dem der NOx-Okklusions-Reduktions-Katalysator beginnt, von dem Modus einer fetten Verbrennung in den Modus einer mageren Verbrennung geschaltet zu werden;
die proportionale Steuerungsbedingung durch Multiplizieren der Abweichung mit einer spezifizierten ersten Proportionalverstärkung berechnet wird, wenn sich der NOx-Okklusions-Reduktions-Katalysator in dem Modus einer fetten Verbrennung befindet,
die proportionale Steuerungsbedingung durch Multiplizieren der Abweichung mit einer zweiten Proportionalverstärkung berechnet wird, die größer als die erste Proportionalverstärkung ist, bis das Schalten des NOx-Okklusions-Reduktions-Katalysators von dem Modus einer fetten Verbrennung in den Modus einer mageren Verbrennung abgeschlossen ist, und
die proportionale Steuerungsbedingung durch Multiplizieren der Abweichung mit einer dritten Proportionalverstärkung berechnet wird, die größer als die zweite Proportionalverstärkung ist, wenn sich der NOx-Okklusions-Reduktions-Katalysator in dem Modus einer mageren Verbrennung befindet;
oder
die integrale Steuerungsbedingung durch Multiplizieren der Zeitintegration der Abweichung mit einer spezifizierten ersten Integralverstärkung berechnet wird, wenn sich der NOx-Okklusions-Reduktions-Katalysator in dem Modus einer fetten Verbrennung befindet,
die integrale Steuerungsbedingung durch Multiplizieren der Zeitintegration der Abweichung mit einer zweiten Integralverstärkung berechnet wird, die größer als die erste Integralverstärkung ist, bis das Schalten des NOx-Okklusions-Reduktions-Katalysators von dem Modus einer fetten Verbrennung in den Modus einer mageren Verbrennung abgeschlossen ist, und
die integrale Steuerungsbedingung durch Multiplizieren der Zeitintegration der Abweichung mit einer dritten Integralverstärkung berechnet wird, die größer als die zweite Integralverstärkung ist, wenn sich der NOx-Okklusions-Reduktions-Katalysator in dem Modus einer mageren Verbrennung befindet.

## Revendications

1. Dispositif de commande de moteur (100) qui actionne un mécanisme de réglage de débit d'échappement (321a) pour commander la pression de suralimentation d'un moteur (2) comprenant un compresseur d'alimentation (3), le mécanisme de réglage de débit d'échappement (321a) réglant un débit de gaz d'échappement à travers un trajet d'échappement (2b), et le compresseur d'alimentation (3) entraînant une turbine (321) au moyen du gaz d'échappement qui s'écoule à travers le trajet d'échappement (2b) du moteur (2) et suralimentant l'air qui s'écoule à travers un trajet d'admission (2a) jusqu'au moteur (2) au moyen d'un compresseur (313) accouplé à la turbine (321), le dispositif de commande de moteur (100) comprenant :
une section de calcul d'écart (110) qui calcule un écart entre une valeur de sortie et une valeur cible de la pression de suralimentation ; une section de calcul de terme de commande proportionnelle (120) qui calcule un terme de commande proportionnelle par multiplication de l'écart par un gain proportionnel, le terme de commande proportionnelle étant utilisé pour modifier une quantité d'actionnement du mécanisme de réglage de débit d'échappement (321a) proportionnellement à l'écart ; une section de calcul de terme de commande intégrale (130) qui calcule un terme de commande intégrale par multiplication de l'intégration temporelle de l'écart par un gain intégral, le terme de commande intégrale étant utilisé pour modifier la quantité d'actionnement du mécanisme de réglage de débit d'échappement (321a) proportionnellement à l'intégration temporelle de l'écart ; et
une section de calcul de quantité d'actionnement (140) qui additionne le terme de commande proportionnelle et le terme de commande intégrale pour calculer la quantité d'actionnement du mécanisme de réglage de débit d'échappement (321a), dans lequel
le trajet d'écoulement (2b) est doté d'un catalyseur d'occlusion/réduction de NOx qui absorbe les NOx dans un mode de combustion pauvre et réduit les NOx dans un mode de combustion riche,
la section de calcul de terme de commande intégrale (130) initialise l'intégration temporelle de l'écart à une valeur spécifiée et calcule le terme de commande intégrale par multiplication de l'intégration temporelle initialisée de l'écart par le gain intégral à un instant auquel le catalyseur d'occlusion/réduction de NOx commence à passer du mode de combustion riche au mode de combustion pauvre, et
la section de calcul de terme de commande proportionnelle (120) :
calcule le terme de commande proportionnelle par multiplication de l'écart par un premier gain proportionnel spécifié lorsque le catalyseur d'occlusion/réduction de NOx est dans le mode de combustion riche,
calcule le terme de commande proportionnelle par multiplication de l'écart par un deuxième gain proportionnel qui est supérieur au premier gain proportionnel jusqu'à ce que le passage du catalyseur d'occlusion/réduction de NOx du mode de combustion riche au mode de combustion pauvre soit achevé, et
calcule le terme de commande proportionnelle par multiplication de l'écart par un troisième gain proportionnel qui est supérieur au deuxième gain proportionnel lorsque le catalyseur d'occlusion/réduction de NOx est dans le mode de combustion pauvre ;
ou la section de calcul de terme de commande intégrale (130) :
calcule le terme de commande intégrale par multiplication de l'intégration temporelle de l'écart par un premier gain intégral spécifié lorsque le catalyseur d'occlusion/réduction de NOx est dans le mode de combustion riche ;
calcule le terme de commande intégrale par multiplication de l'intégration temporelle de l'écart par un deuxième gain intégral qui est supérieur au premier gain intégral jusqu'à ce que le passage du catalyseur d'occlusion/réduction de NOx du mode de combustion riche au mode de combustion pauvre soit achevé ; et
calcule le terme de commande intégrale par multiplication de l'intégration temporelle de l'écart par un troisième gain intégral qui est supérieur au deuxième gain intégral lorsque le catalyseur d'occlusion/réduction de NOx est dans le mode de combustion pauvre.

2. Dispositif de commande de moteur (100) selon la revendication 1, dans lequel
la section de calcul de terme de commande intégrale (130) initialise l'intégration temporelle de l'écart à la valeur spécifiée et calcule le terme de commande intégrale par multiplication de la valeur spécifiée par le gain intégral dans le cas où une valeur de pression du gaz d'échappement dépasse une valeur seuil spécifiée à l'instant auquel le catalyseur d'occlusion/réduction de NOx commence à passer du mode de combustion riche au mode de combustion pauvre.

3. Procédé de commande de moteur qui
actionne un mécanisme de réglage de débit d'échappement (321a) pour commander la pression de suralimentation d'un moteur (2) comprenant un compresseur d'alimentation (3), le mécanisme de réglage de débit d'échappement (321a) réglant un débit de gaz d'échappement à travers un trajet d'échappement (2b), et le compresseur d'alimentation (3) entraînant une turbine (321) au moyen du gaz d'échappement qui s'écoule à travers le trajet d'échappement (2b) du moteur (2) et suralimentant l'air qui s'écoule à travers un trajet d'admission (2a) jusqu'au moteur (2) au moyen d'un compresseur (313) accouplé à la turbine (321), le procédé de commande de moteur (2) comprenant : le calcul d'un écart entre une valeur de sortie et une valeur cible de la pression de suralimentation ;
le calcul d'un terme de commande proportionnelle par multiplication de l'écart par un gain proportionnel, le terme de commande proportionnelle étant utilisé pour modifier une quantité d'actionnement du mécanisme de réglage de débit d'échappement (321a) proportionnellement à l'écart ;
le calcul d'un terme de commande intégrale par multiplication de l'intégration temporelle de l'écart par un gain intégral, le terme de commande intégrale étant utilisé pour modifier la quantité d'actionnement du mécanisme de réglage de débit d'échappement (321a) proportionnellement à l'intégration temporelle de l'écart ; et
l'addition du terme de commande proportionnelle et du terme de commande intégrale pour calculer la quantité d'actionnement du mécanisme de réglage de débit d'échappement (321a), dans lequel
le trajet d'écoulement (2b) est doté d'un catalyseur d'occlusion/réduction de NOx qui absorbe les NOx dans un mode de combustion pauvre et réduit les NOx dans un mode de combustion riche,
lors de l'étape de calcul du terme de commande intégrale, l'intégration temporelle de l'écart est initialisée à une valeur spécifiée, et le terme de commande intégrale est calculé par multiplication de l'intégration temporelle initialisée de l'écart par le gain intégral à un instant auquel le catalyseur d'occlusion/réduction de NOx commence à passer du mode de combustion riche au mode de combustion pauvre ;
le terme de commande proportionnelle est calculé par multiplication de l'écart par un premier gain proportionnel spécifié lorsque le catalyseur d'occlusion/réduction de NOx est dans le mode de combustion riche,
le terme de commande proportionnelle est calculé par multiplication de l'écart par un deuxième gain proportionnel qui est supérieur au premier gain proportionnel jusqu'à ce que le passage du catalyseur d'occlusion/réduction de NOx du mode de combustion riche au mode de combustion pauvre soit achevé, et
le terme de commande proportionnelle est calculé par multiplication de l'écart par un troisième gain proportionnel qui est supérieur au deuxième gain proportionnel lorsque le catalyseur d'occlusion/réduction de NOx est dans le mode de combustion pauvre ;
ou
le terme de commande intégrale est calculé par multiplication de l'intégration temporelle de l'écart par un premier gain intégral spécifié lorsque le catalyseur d'occlusion/réduction de NOx est dans le mode de combustion riche ;
le terme de commande intégrale est calculé par multiplication de l'intégration temporelle de l'écart par un deuxième gain intégral qui est supérieur au premier gain intégral jusqu'à ce que le passage du catalyseur d'occlusion/réduction de NOx du mode de combustion riche au mode de combustion pauvre soit achevé ; et
le terme de commande intégrale est calculé par multiplication de l'intégration temporelle de l'écart par un troisième gain intégral qui est supérieur au deuxième gain intégral lorsque le catalyseur d'occlusion/réduction de NOx est dans le mode de combustion pauvre.
